# DEMANDE DE BREVET EUROPEEN

(11) **EP 2 921 049 A1**
(43) Date de publication de la demande: **23.09.2015**
(21) Numéro de dépôt: 14305378.3
(22) Date de dépôt: 18.03.2014
(51) Int. Cl.: A01K 73/06

(54) **Dispositif de rangement d'un filet de pêche**

(71) Demandeur: Etablissements BOPP Treuils JEB, 29160 Crozon (FR)
(72) Inventeur: Bopp, Louis, 29160 Crozon (FR)
(74) Mandataire: Blot, Philippe Robert Emile

(57) **Abrégé**

Dispositif de rangement de filet de pêche comprend un support (8) destiné à être porté par un outil de levage et deux rouleaux (10, 12) montés sur le support (8), les rouleaux (10, 12) s'étendant suivant des axes (A1, A2) respectifs parallèles et distincts, les deux rouleaux (10, 12) étant disposés côte à côte de manière à délimiter entre eux un passage (14) pour une ligne d'un filet de pêche. Procédé de rangement d'un filet de pêche comprend les étapes d'engager une ligne du filet de pêche dans le passage (14) délimité entre les deux rouleaux (10, 12), et de déplacer le dispositif de rangement (4) au-dessus du conteneur de manière à répartir le filet dans le conteneur, à l'aide de l'outil de levage portant le dispositif de rangement.

## Description

La présente invention concerne le domaine des bateaux de pêche, et en particulier un dispositif de rangement d'un filet de pêche pour aider un équipage d'un navire de pêche à ranger le filet après utilisation.

Un filet de pêche, tel qu'un filet de pêche à la senne, comprend une ligne supérieure munie de flotteurs, une ligne inférieure munie de lests et une nappe formée de mailles s'étendant entre la ligne supérieure et la ligne inférieure.

Après utilisation, un filet de pêche est remonté sur le bateau et posé dans un conteneur, par exemple une cale du bateau ou un bac à filet. Il est souhaitable de bien répartir le filet dans le conteneur afin qu'il soit rangé de manière compacte. Le rangement du filet à la main représente une tâche pénible qui peut mobiliser plusieurs hommes compte tenu des dimensions et du poids des filets de pêches.

EP 1 292 188 B1 divulgue un dispositif de rangement d'un filet de pêche comprenant une poulie portée par une grue. La poulie est formée d'une paire de disques coaxiaux pour guider la ligne supérieure du filet munie de flotteurs, une ouverture étant ménagée entre les deux disques pour le passage libre de la nappe du filet. Les disques sont montés aux extrémités de bras permettant d'écarter ou de rapprocher les disques. Le déplacement de la poulie à l'aide de la grue permet de répartir convenablement le filet dans le conteneur associé.

Un des buts de l'invention est de proposer un dispositif de rangement d'un filet de pêche qui soit simple et robuste.

A cet effet, l'invention propose un dispositif de rangement d'un filet de pêche, comprenant un support destiné à être porté par un outil de levage et deux rouleaux montés sur le support, les rouleaux s'étendant suivant des axes respectifs parallèles et distincts et étant disposés côte à côte de manière à délimiter entre eux un passage pour une ligne d'un filet de pêche.

Des caractéristiques optionnelles du dispositif de rangement sont les suivantes :
- le passage débouche suivant la direction des axes des rouleaux par une ouverture délimitée entre des tronçons d'extrémité des rouleaux ;
- l'ouverture est plus étroite que le passage de manière à empêcher une ligne d'un filet de pêche engagée dans le passage de sortir par l'ouverture ;
- au moins un rouleau a un tronçon d'extrémité délimitant l'ouverture qui possède un diamètre supérieur à un diamètre d'un tronçon central du rouleau délimitant le passage ;
- les rouleaux sont montés sur le support en étant mobiles l'un par rapport à l'autre de manière à modifier l'entraxe entre les rouleaux ;
- un rouleau est monté sur le support en étant fixe en translation perpendiculairement à son axe et l'autre rouleau est monté sur le support en étant mobile en translation perpendiculairement à son axe ;
- le dispositif comprend également un actionneur pour déplacer les rouleaux l'un par rapport à l'autre de manière à faire varier leur entraxe ;
- chaque rouleau est monté en porte-à-faux sur le support ;
- les rouleaux sont montés à rotation sur le support autour de leurs axes respectifs ;
- les rouleaux sont contrarotatifs et sont motorisés pour leur entraînement en rotation autour de leurs axes respectifs ;
- le dispositif comprend un actionneur d'orientation pour orienter le support autour d'un axe d'orientation sensiblement perpendiculaire au plan défini par les axes des rouleaux.

L'invention concerne également un ensemble de rangement de filet de pêche comprenant un outil de levage, tel qu'une grue à flèche, en particulier une grue à flèche articulée et/ou télescopique, portant un dispositif de rangement tel que défini ci-dessus, et un navire comprenant un tel ensemble de rangement, l'outil de levage étant fixé sur le pont du navire.

L'invention concerne encore un procédé de rangement d'un filet de pêche récupéré dans la mer dans un conteneur d'un navire de pêche, à l'aide d'un dispositif de rangement tel que défini ci-dessus, le procédé comprenant les étapes de :
- engager une ligne du filet de pêche dans le passage délimité entre les deux rouleaux ; et
- déplacer le dispositif de rangement au-dessus du conteneur de manière à répartir le filet dans le conteneur, à l'aide d'un outil de levage portant le dispositif de rangement.

L'invention et ses avantages seront mieux compris à la lecture de la description qui va suivre, donnée uniquement à titre d'exemple, et faite en référence aux dessins annexés, sur lesquels :
- la Figure 1 est une vue en perspective d'un ensemble de rangement de filet de pêche comprenant une grue portant un dispositif de rangement de filet de pêche ;
- la Figure 2 est une vue agrandie de la zone II de la Figure 1, illustrant le dispositif de rangement de filet de pêche ;
- la Figure 3 est une vue en perspective du dispositif de rangement de filet de pêche suivant un autre angle de vue ;
- la Figure 4 est une vue analogue à la Figure 2, illustrant le dispositif de rangement dans une autre configuration.

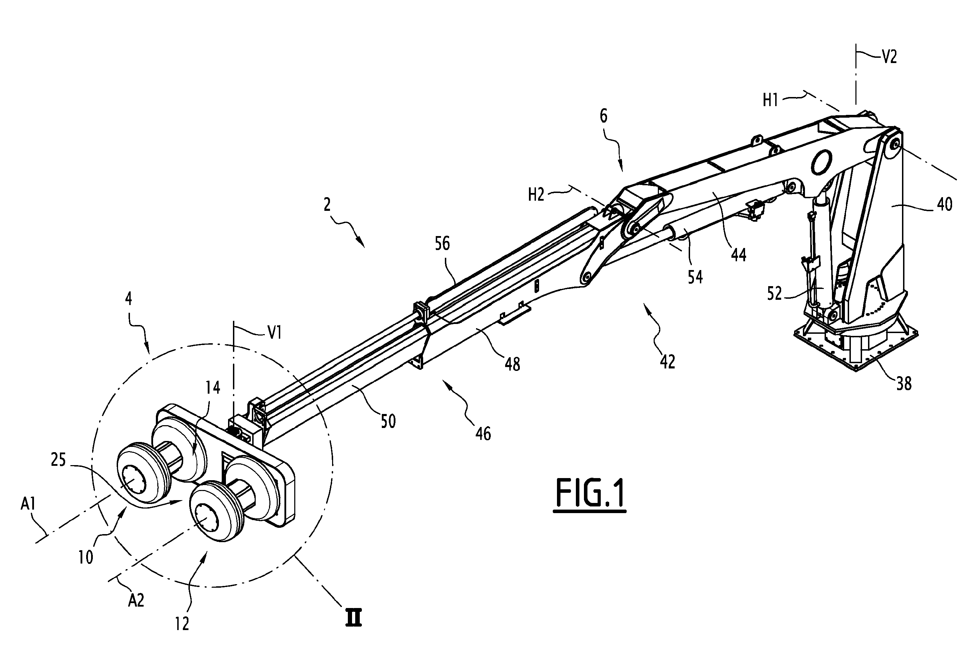

Tel qu'illustré sur la figure 1, l'ensemble de rangement 2 d'un filet de pêche comprend un dispositif de rangement 4 de filet de pêche porté par une grue 6 destinée à être fixée sur le pont d'un navire de pêche et permettant de déplacer le dispositif de rangement 4.

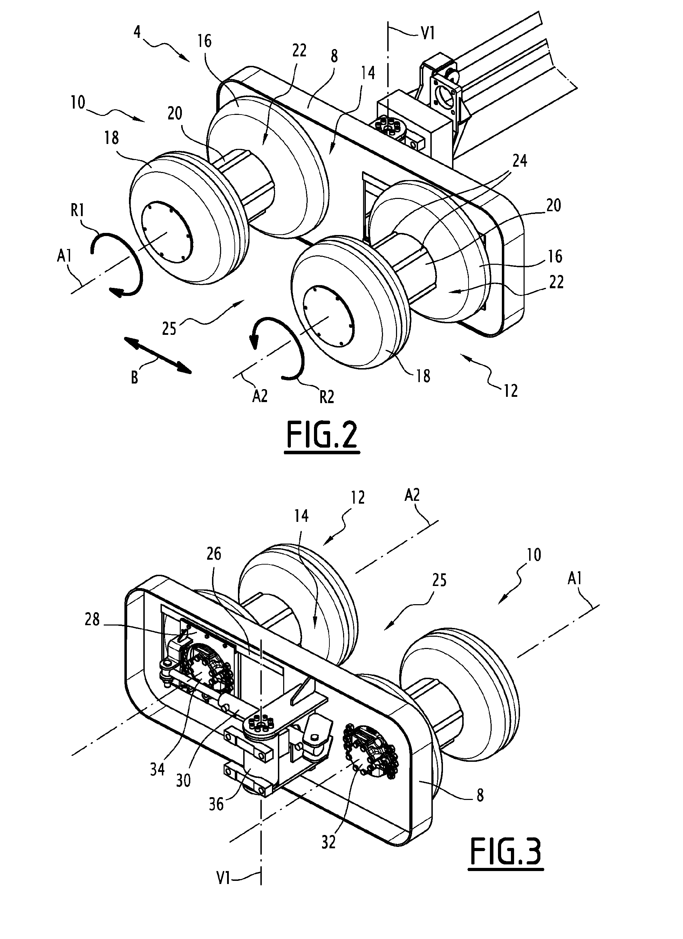

Tel qu'illustré sur les figures 2 à 4, le dispositif de rangement 4 comprend un support 8 et deux rouleaux 10, 12 montés sur le support 8, les rouleaux 10, 12 étant parallèles et disposés côte à côte de manière à délimiter entre eux un passage 14 pour une ligne d'un filet de pêche, en particulier une ligne supérieure munie de flotteurs.

Les deux rouleaux 10, 12 s'étendent suivant des axes A1, A2 respectifs parallèles et distincts.

Chaque rouleau 10, 12 présente une forme sensiblement de révolution autour de son axe A1, A2.

Chaque rouleau 10, 12 possède le long de son axe A1, A2 un tronçon d'extrémité adjacent au support 8 formant une base 16, un tronçon d'extrémité éloigné du support 8 formant une tête 18 et un tronçon central 20 situé axialement entre les tronçons d'extrémité.

La base 16 de chaque rouleau 10, 12 présente un diamètre supérieur à celui de son tronçon central 20. La base 16 de chaque rouleau 10, 12 fait saillie radialement vers l'extérieur par rapport au tronçon central 20.

La tête 18 de chaque rouleau 10, 12 présente un diamètre supérieur à celui de son tronçon central 20. La tête 18 de chaque rouleau 10, 12 fait saillie radialement vers l'extérieur par rapport au tronçon central 20. La tête 18 de chaque rouleau 10, 12 présente ici un bord périphérique arrondi.

Chaque rouleau 10, 12 possède donc une gorge 22 annulaire délimitée axialement entre ses tronçons d'extrémité, à savoir la base 16 et la tête 18, de plus grand diamètre que son tronçon central 20. Le fond de la gorge 22 est formé par la partie centrale 20.

Le tronçon central 20 de chaque rouleau 10, 12 est ici de forme cylindrique de section transversale circulaire. Chaque rouleau 10, 12 possède des nervures 24 sur la surface externe de son tronçon central 20. Les nervures 24 de chaque rouleau 10, 12 s'étendent parallèlement à l'axe A1, A2 du rouleau 10, 12.

Le passage 14 est délimité entre les tronçons centraux 20 des rouleaux 10, 12. Le passage 14 débouche suivant la direction des axes A1, A2 des rouleaux 10, 12 par une ouverture 25 délimitée entre les tronçons d'extrémité des rouleaux 10, 12 éloignés du support 8, à savoir les têtes 18. L'ouverture 25 est moins large que le passage 14 suivant une direction transversale B coupant les axes A1, A2 des deux rouleaux 10, 12. Le passage 14 est fermé du côté opposé à celui de l'ouverture 25 pour le support 8 lui-même.

Les rouleaux 10, 12 s'étendent chacun en porte-à-faux à partir du support 8. Les tronçons d'extrémité des rouleaux 10, 12 adjacents au support 8, à savoir les bases 16, sont liés au support 8, tandis que les tronçons d'extrémité des rouleaux 10, 12 éloignés du support 8, à savoir les têtes 18, sont libres.

L'entraxe entre les rouleaux 10, 12 est réglable, de manière à régler l'écartement entre les rouleaux 10, 12 et ainsi la largeur de l'ouverture 25.

Les rouleaux 10, 12 sont montés sur le support 8 de manière à être mobiles l'un par rapport à l'autre pour sélectivement augmenter l'entraxe, de manière à écarter les rouleaux 10, 12 l'un de l'autre et élargir l'ouverture 25, ou diminuer l'entraxe, de manière à rapprocher les rouleaux 10, 12 l'un de l'autre et rétrécir l'ouverture 25.

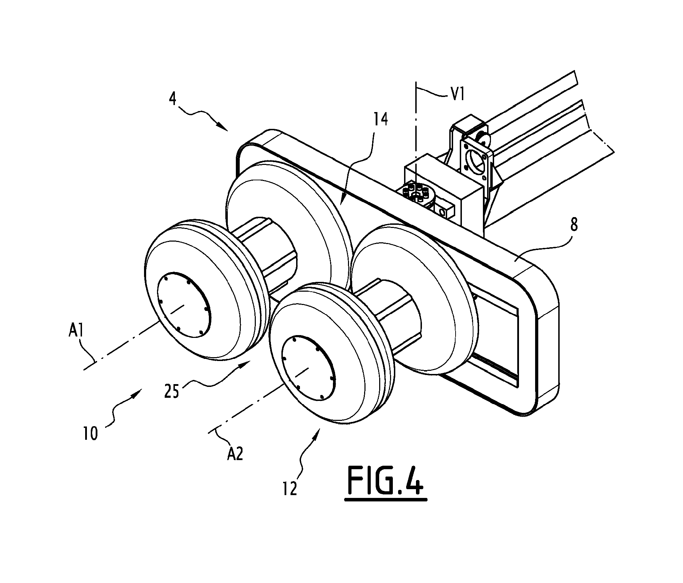

Les rouleaux 10, 12 sont mobiles entre une configuration fermée dans laquelle les rouleaux 10, 12 sont rapprochés l'un de l'autre (Figure 4) et une configuration ouverte dans laquelle les rouleaux 10, 12 sont écarté l'un de l'autre (Figure 2).

En configuration ouverte, l'ouverture 25 est suffisamment large pour permettre l'insertion d'un flotteur d'une ligne supérieure d'un filet de pêche dans le passage 14 par l'ouverture 25.

En configuration fermée, l'ouverture 25 est suffisamment étroite pour empêcher un flotteur d'une ligne supérieure d'un filet de pêche engagé dans le passage 14 de sortir du passage 14 par l'ouverture 25.

Les rouleaux 10, 12 sont par exemple mobiles en translation l'un par rapport à l'autre perpendiculairement à la direction des axes A1, A2 des rouleaux 10, 12. Les rouleaux 10, 12 sont ici mobiles en translation l'un par rapport à l'autre suivant la direction transversale B coupant les axes A1, A2 des deux rouleaux 10, 12.

Un seul des deux rouleaux 10, 12 est ici monté mobile en translation perpendiculairement à son axe.

Le dispositif de rangement 4 comprend un rouleau 10 fixe qui est monté fixe en translation sur le support 8, et un rouleau 12 mobile qui est monté mobile en translation sur le support 8.

Le rouleau 12 mobile est monté coulissant en translation sur le support 8. Le support 8 comprend un rail 26 fixé sur le support 8 et un chariot 28 coulissant sur le rail 26 (Figure 3). Le rouleau 12 mobile est fixé sur le chariot 28.

Le dispositif de rangement 4 comprend un actionneur d'écartement 30 (Figure 3) pour déplacer le rouleau 12 mobile. L'actionneur d'écartement 30 est ici un vérin hydraulique. L'actionneur d'écartement 30 est disposé entre le support 8 et le chariot 28.

Les rouleaux 10, 12 sont montés rotatifs autours de leurs axes A1, A2 respectifs. Les rouleaux 10, 12 sont contrarotatifs : ils tournent en sens opposés autour de leurs axes respectifs A1, A2 (Flèches R1, R2 sur la Figure 1).

Les rouleaux 10, 12 sont motorisés pour leur entraînement en rotation autour de leurs axes A1, A2 respectifs. L'entraînement des rouleaux 10, 12 en rotation permet d'entraîner une ligne d'un filet de pêche engagée entre les rouleaux 10, 12.

Chaque rouleau 10, 12 est couplé à un moteur d'entrainement en rotation du rouleau 10, 12. Le dispositif de rangement 4 comprend ici un moteur 32, 34 d'entraînement en rotation respectif associé à chaque rouleau 10, 12. Le moteur 32 d'entraînement du rouleau 10 fixe est monté sur le support 8 et le moteur 34 d'entraînement du rouleau 12 mobile est monté sur le chariot 28. Les moteurs 32, 34 sont de préférence des moteurs hydrauliques utilisant la pression d'un liquide pour générer un mouvement de rotation.

Le dispositif de rangement 4 comprend un actionneur d'orientation 36 (Figure 3) pour déplacer le support 8 à rotation autour d'un axe d'orientation de dispositif de rangement V1. L'axe d'orientation de dispositif de rangement V1 est sensiblement perpendiculaire au plan défini par les axes A1, A2 des rouleaux 10, 12. L'axe d'orientation de dispositif de rangement V1 est destiné à être sensiblement vertical. L'actionneur d'orientation 36 est un actionneur rotatif. L'actionneur d'orientation 36 est de préférence un actionneur hydraulique. Le dispositif de rangement 4 est destiné à être fixé sur l'outil de levage, ici la grue 6, par l'intermédiaire de l'actionneur d'orientation 36.

Telle qu'illustrée sur la Figure 1, la grue 6 comprend une embase 38 fixe, une tourelle 40 montée pivotante sur la embase 38 autour d'un axe d'orientation de grue V2 vertical, et une flèche 42 monté rotative sur la tourelle 40 autour d'un axe de relevage H1 horizontal. L'embase 38 est destinée à être fixée sur le pont d'un navire.

La flèche 42 est articulée. La flèche 42 comprend plusieurs bras articulés les uns aux autres, les bras incluant un bras de relevage 44 monté pivotant sur la tourelle 40 autour de l'axe de relevage H1 et un bras d'extrémité 46 le plus éloigné de la tourelle 40.

La flèche 42 comprend ici exactement deux bras, à savoir le bras de relevage 44 monté pivotant sur la tourelle 40 autour de l'axe de relevage H1 et le bras d'extrémité 46 articulé sur la bras de relevage 44 autour d'un axe d'articulation H2 horizontal.

La flèche 42 est télescopique. Plus spécifiquement, le bras d'extrémité 46 de la flèche 42 est télescopique. Il comprend plusieurs éléments de bras 48, 50 montés télescopiques les uns sur les autres de manière à faire varier la longueur du bras d'extrémité 46. Le bras d'extrémité 46 comprend ici deux éléments de bras 48, 50.

La grue 6 possède des actionneurs pour contrôler les mouvements de la flèche 42. La grue 6 possède ici un actionneur de relevage 52 pour commander la rotation du bras de relevage 46 par rapport à la tourelle 40, un actionneur d'articulation 54 pour commander la rotation du bras d'extrémité 46 par rapport au bras de relevage 44, et un actionneur d'extension 56 pour commander l'extension et la rétraction des éléments de bras 48, 50 du bras d'extrémité 46 télescopique. Les actionneurs de la grue 6 sont des vérins hydrauliques.

En fonctionnement, pour remonter le filet de pêche de la mer dans le navire, le filet de pêche est passé autour d'une poulie servant à sortir le filet de la mer et retombe dans le conteneur de stockage associé.

Le dispositif de rangement 4 est prévu pour saisir le brin d'une ligne du filet de pêche retombant de la poulie dans le conteneur, pour guider le filet de pêche et l'étaler correctement dans le conteneur.

Selon un procédé de pose d'un filet de pêche, dans une première étape, le dispositif de rangement 4 est déplacé est commandé pour engager une ligne du filet de pêche, de préférence la ligne supérieure munie de flotteurs, entre les rouleaux 10, 12, la nappe du filet passant par l'ouverture 25.

Pour saisir la ligne du filet de pêche, les rouleaux 10, 12 du dispositif de rangement 4 sont écartés l'un de l'autre pour élargir l'ouverture 25. Le dispositif de rangement 4 est déplacé, à l'aide de la grue 6, pour insérer la ligne du filet de pêche dans le passage 14 délimité entre les rouleaux 10, 12, en passant par l'ouverture 25. Les rouleaux 10, 12 sont ensuite rapprochés pour rétrécir l'ouverture 25, de manière à empêcher la ligne de ressortir du passage 14 par l'ouverture 25. En revanche, la nappe du filet passe par l'ouverture 25 lorsque les rouleaux 10, 12 sont rapprochés.

Dans une deuxième étape, le dispositif de rangement 4 est déplacé au-dessus du conteneur pour répartir le filet dans le conteneur. Le filet se dépose sur le fond du conteneur sous l'effet de la gravité.

Pendant la deuxième étape, les rouleaux 10, 12 sont entraînés en rotation par les moteurs 32, 34 pour exercer une force de traction sur la ligne du filet de pêche engagée entre les rouleaux 10, 12.

Le passage de la nappe du filet par l'ouverture 25 évite que la nappe passe entre les rouleaux 10, 12. Ceci permet un étalement plus facile du filet de pêche et évite des détériorations du filet de pêche.

Les gorges 22 des rouleaux 10, 12 délimitée entre les bases 16 et les têtes 18 des rouleaux 10, 12 permettent de maintenir la ligne du filet de pêche entre les rouleaux 10, 12 sans qu'elle puisse sortir par l'ouverture 25.

Les bases 16 des rouleaux 10, 12 élargies par rapport à leurs tronçons centraux 20 évitent que le filet ne se détériore contre le support 8. Dans une variante, les tronçons d'extrémité des rouleaux 10, 12 adjacents au support 8 ne sont pas élargis et présente un diamètre sensiblement égale à celui des tronçons centraux 20 des rouleaux 10, 12.

Les têtes 18 des rouleaux 10, 12 élargies par rapport à leurs tronçons centraux 20 permettent de former une ouverture 25 étroite et de retenir la ligne du filet de pêche dans le passage 14. Dans une variante, un seul des deux rouleaux 10, 12 est muni d'une tête 18 élargie, l'autre rouleau possédant un tronçon d'extrémité éloignée du support 8 sensiblement de même diamètre que le tronçon central de cet autre rouleau.

Les rouleaux 10, 12 mobiles l'un par rapport à l'autre permette d'élargir l'ouverture pour saisir une ligne d'un filet de pêche. Dans l'exemple illustré, un seul rouleau 12 est mobile perpendiculaire à son axe par rapport au support 8, l'autre rouleau 10 étant fixe perpendiculairement à son axe par rapport au support 8. En variante, les deux rouleaux sont mobiles perpendiculairement à leurs axes par rapport au support 8 pour régler l'entraxe entre les rouleaux.

La motorisation des rouleaux 10, 12 facilite l'étalement du filet en permettant de contrôler l'avancée du filet et évitant que le filet ne prenne trop de courbure entre la poulie utilisée pour remonter le filet et le dispositif de rangement 4.

Les nervures 24 prévues sur la partie centrale 20 des rouleaux 10, 12 augmentent la prise des rouleaux 10, 12 sur la ligne du filet engagée entre les rouleaux 10,12.

L'orientation du dispositif de rangement 4 à l'aide de l'actionneur d'orientation 36 permet d'orienter le dispositif de rangement 4 de manière à ne pas exercer de tension excessive sur le filet, en particulier sur la nappe passant dans l'ouverture 25. Le dispositif de rangement 4 est orienté par rapport à la poulie remontant le filet.

Le dispositif de rangement 4 est destiné à être fixé de manière générale sur tout type d'outil de levage de pont de navire permettant de déplacer le dispositif de rangement au-dessus d'un conteneur de réception du filet de pêche.

Dans le mode de réalisation illustré, le dispositif de rangement 4 est porté par une grue 6. En variante, le dispositif de rangement 4 est porté par exemple par un portique monté sur le pont du navire déplaçable au-dessus du conteneur de stockage du filet.

L'outil de levage est équipé de moteurs et/ou d'actionneurs pour générer les efforts de déplacement du dispositif de rangement. L'outil de levage est par exemple hydraulique, et équipé d'actionneurs hydrauliques.

Le dispositif de rangement 4 et l'outil de levage sont commandés par un opérateur à l'aide d'une unité commande permettant à l'opérateur de commander le déplacement du dispositif de rangement 4 à l'aide de l'outil levage, ainsi que l'écartement des rouleaux 10, 12, la rotation des rouleaux 10, 12, et l'orientation du dispositif de rangement 4.

Le dispositif de rangement 4 est simple et robuste. Il est adapté à une utilisation dans des conditions difficiles rencontrées par les navires de pêche.

## Revendications

1. Dispositif de rangement d'un filet de pêche, comprenant un support (8) destiné à être porté par un outil de levage et deux rouleaux (10, 12) montés sur le support (8), les rouleaux (10, 12) s'étendant suivant des axes (A1, A2) respectifs parallèles et distincts, les deux rouleaux (10, 12) étant disposés côte à côte de manière à délimiter entre eux un passage (14) pour une ligne d'un filet de pêche.

2. Dispositif de rangement selon la revendication 1, dans lequel le passage (14) débouche suivant la direction des axes (A1, A2) des rouleaux par une ouverture (25) délimitée entre des tronçons d'extrémité (18) des rouleaux (10, 12).

3. Dispositif de rangement selon la revendication 2, dans lequel l'ouverture (25) est plus étroite que le passage (14) de manière à empêcher une ligne d'un filet de pêche engagée dans le passage (14) de sortir par l'ouverture (25).

4. Dispositif de rangement selon la revendication 2 ou 3, dans lequel au moins un rouleau (10, 12) a un tronçon d'extrémité (18) délimitant l'ouverture (25) qui possède un diamètre supérieur à un diamètre d'un tronçon central (20) du rouleau (10, 12) délimitant le passage (14).

5. Dispositif de rangement selon l'une quelconque des revendications précédentes, dans lequel les rouleaux (10, 12) sont montés sur le support (8) en étant mobiles l'un par rapport à l'autre de manière à modifier l'entraxe entre les rouleaux (10, 12).

6. Dispositif de rangement selon l'une quelconque des revendications précédentes, dans lequel un rouleau (10) est monté sur le support en étant fixe en translation perpendiculairement à son axe (A1) et l'autre rouleau (12) est monté sur le support en étant mobile en translation perpendiculairement à son axe (A2).

7. Dispositif de rangement selon la revendication 5 ou 6, comprenant un actionneur pour déplacer les rouleaux (10, 12) l'un par rapport à l'autre de manière à faire varier leur entraxe

8. Dispositif de rangement selon l'une quelconque des revendications précédentes, dans lequel chaque rouleau (10, 12) est monté en porte-à-faux sur le support (8).

9. Dispositif de rangement selon l'une quelconque des revendications précédentes, dans lequel les rouleaux (10, 12) sont montés à rotation sur le support (8) autours de leurs axes (A1, A2) respectifs.

10. Dispositif de rangement selon la revendication 9, dans lequel les rouleaux (10, 12) sont contrarotatifs.

11. Dispositif de rangement selon la revendication 9 ou 10, dans lequel les rouleaux (10, 12) sont motorisés pour leur entraînement en rotation autour de leurs axes (A1, A2) respectifs.

12. Dispositif de rangement selon l'une quelconque des revendications précédentes, comprenant un actionneur d'orientation pour orienter le support (8) autour d'un axe d'orientation sensiblement perpendiculaire au plan défini par les axes (A1, A2) des rouleaux (10, 12).

13. Ensemble de rangement de filet de pêche comprenant un outil de levage (6), tel qu'une grue à flèche, en particulier une grue à flèche articulée et/ou télescopique, portant un dispositif de rangement (4) selon l'une quelconque des revendications précédentes.

14. Navire comprenant un ensemble de rangement selon la revendication 13, l'outil de levage (6) étant fixé sur le pont du navire.

15. Procédé de rangement d'un filet de pêche récupéré dans la mer dans un conteneur d'un navire de pêche, à l'aide d'un dispositif de rangement (4) selon l'une quelconque des revendications 1 à 12, comprenant les étapes de :
- engager une ligne du filet de pêche dans le passage (14) délimité entre les deux rouleaux (10, 12) ; et
- déplacer le dispositif de rangement (4) au-dessus du conteneur de manière à répartir le filet dans le conteneur, à l'aide de l'outil de levage portant le dispositif de rangement.
